# EUROPÄISCHE PATENTSCHRIFT

(11) **EP 2 205 478 B1**
(45) Veröffentlichungstag und Bekanntmachung des Hinweises auf die Patenterteilung: **28.05.2014**
(21) Anmeldenummer: 08759541.9
(22) Anmeldetag: 13.05.2008
(51) Int. Cl.: B62D 5/00, B62D 15/02

(54) **VERFAHREN UND VORRICHTUNG ZUR BESTIMMUNG EINER LENKWINKELINFORMATION**
METHOD AND DEVICE FOR DETERMINING STEERING ANGLE INFORMATION
PROCÉDÉ ET DISPOSITIF DE DÉTERMINATION D'UNE INFORMATION D'ANGLE DE DIRECTION

(30) Priorität: 02.10.2007 DE 102007000958
(43) Veröffentlichungstag der Anmeldung: 14.07.2010
(73) Patentinhaber: ZF-Lenksysteme GmbH, 73527 Schwäbisch Gmünd (DE)
(72) Erfinder: LUNDQUIST, Christian, S-583 33 Linköping (SE); GROSSHEIM, Reinhard, 73453 Abtsgmünd (DE)
(86) Internationale Anmeldenummer: PCT/EP2008/055835
(87) Internationale Veröffentlichungsnummer: WO 2009/047020

(56) Entgegenhaltungen:
- DE-A1-102005 059 883
- DE-A1-102007 004 369

## Beschreibung

Die Erfindung betrifft ein Verfahren und eine Vorrichtung zur Bestimmung einer Lenkwinkelinformation in einer elektrischen Hilfskraftlenkung mit variabler Lenkübersetzung.

In der gattungsgemäßen EP 1 754 648 A2 wird eine Überlagerungslenkung offenbart, bei der ein Summenlenkwinkel an einem Ausgangsglied eines Überlagerungsgetriebes mittels eines Index-Sensors detektiert wird. Dabei werden Index-Marken mittels eines Sensors detektiert. Bei Überstreichen einer Mittellagestellung, die einer Geradeausfahrt des Fahrzeuges entspricht, wird ein Index-Impuls ausgelöst.
Zur rechnerischen Bestimmung des Summenlenkwinkels sind zwei weitere Sensoren vorgesehen. Ein erster Sensor erfasst einen vom Fahrer in das Überlagerungsgetriebe eingegebenen Lenkwinkel, ein zweiter Sensor ist zur Erfassung des vom Überlagerungssteller additiv eingeprägten Zusatz-Lenkwinkel vorgesehen. Mittels Addition beider Werte ist ein Gesamtlenkwinkel rechnerisch ermittelbar, der mit den Index-Impulsen aus dem Index-Sensor zur Messung des Summenlenkwinkels plausibilisiert werden kann. Die Funktion des Überlagerungsstellers kann somit in einfacher Weise überprüft werden.

In der DE 10 2004 054 921 A1 wird ein Verfahren zum Betrieb einer elektrischen Servolenkung offenbart, welches dafür vorgesehen ist, einen absoluten Lenkwinkel zu bestimmen. Ein elektrischer Servomotor ist zur Einleitung eines Unterstützungs-Lenkmoments vorgesehen. Ein Motorlagesensor dient zur Erfassung der momentanen Position des Rotors des Servomotors. Diese Information wird als Eingangsgröße eines Algorithmus verwendet, welcher dafür vorgesehen ist, einen absoluten, multiturn- fähigen Lenkwinkwinkel zu errechnen.

Aufgabe vorliegender Erfindung ist es, ein Verfahren und eine Vorrichtung anzugeben, welches es ermöglicht, eine Lenkwinkelinformation zur Verwendung als Eingangsgröße einer variablen Lenkübersetzungsfunktion zu bestimmen.

Diese Aufgabe wird mit den kennzeichnenden Merkmalen des Anspruchs 1 gelöst. Vorrichtungsgemäß wird diese Aufgabe mit den Merkmalen des Anspruchs 12 gelöst.

Die Aufgabe wird verfahrensgemäß dadurch gelöst, dass die Lenkwinkelinformation über den in einem Abschnitt einer Lenksäule anliegenden Lenkwinkel aus einer in diesem Abschnitt befindlichen Index-Vorrichtung und mittels eines Index-Sensor abgefühlten Index-Information ermittelbar ist, und unter Verwendung einer einen Rotor- oder Ritzelwinkel beschreibenden Größe eines im zweiten Abschnitt der Lenksäule befindlichen elektrischen Servomotors bestimmbar ist.

Die Aufgabe wird vorrichtungsgemäß dadurch gelöst, dass eine elektrische Servolenkung mit Überlagerungsteller und Überlagerungsgetriebe mit zwei funktional zuordenbaren Steuergeräten vorgesehen ist, bei der des weiteren vorgesehen ist, dass in einem ersten Abschnitt einer Lenksäule eine Index-Vorrichtung angeordnet ist, wobei wenigstens ein Index-Sensor und wenigstens einer Indexmarkierung vorgesehen sind, die zur Identifikation einer bestimmten Winkelposition einer Lenkhandhabe dienen.

Vorteilhafte Weiterentwicklungen sind in den jeweils anhängigen Unteransprüchen angegeben.

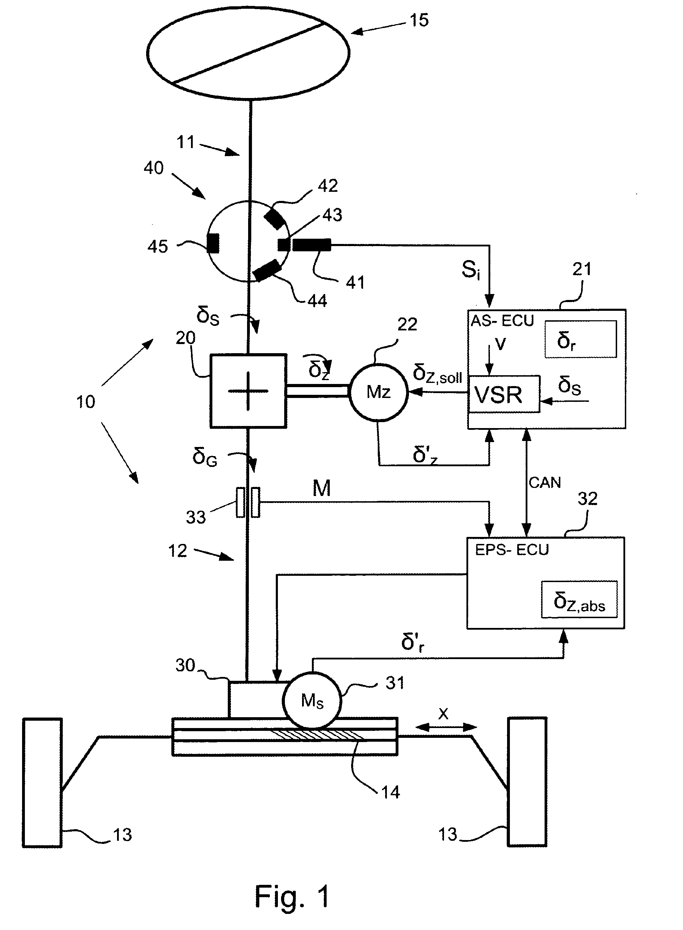

Figur 1 zeigt eine elektrische Hilfskraftlenkung mit variabler Lenkübersetzung und elektromotorischer Servo- Unterstützung.
Im Lenkstrang 10 ist ein Überlagerungsgetriebe 20, ein Überlagerungssteller 22 und eine nachgeordnete elektrische Servounterstützungseinheit 30 angeordnet. Das Überlagerungsgetriebe 20 trennt die Lenksäule in einen ersten Abschnitt 11 und in einen zweiten Abschnitt 12 auf. Der erste Abschnitt 11 ist der Teil der Lenksäule, der die Lenkhandhabe 15 und das Überlagerungsgetriebe 20 mechanisch miteinander verbindet. In diesem Abschnitt liegt der vom Fahrer eingeprägte Lenkwinkel δ_{S} an, der zugleich dem Überlagerungsgetriebe 20 eingangseitig zugeführt ist. Der zweite Abschnitt 12 verbindet die Ausgangswelle des Überlagerungsgetriebes 20 mit dem Eingang der elektrischen Servounterstützungseinheit 30.

Eine dem Überlagerungsgetriebe 20 beziehungsweise dem Überlagerungssteller 22 zugeordnete Steuer- und Regelungseinheit 21, "AS-ECU", führt eine in Software implementierte variable Lenkübersetzungsfunktion "VSR" aus, welche eine Sollvorgabe δ_{Z, soll} für einen mittels des Überlagerungsstellers 22 einzuleitenden Zusatz-Lenkwinkel δ_{Z} ermittelt.
Die elektrische Servounterstützungseinheit 30 besteht im Wesentlichen aus einem Elektromotor 31 , der dafür vorgesehen ist, ein Servomoment M_{S} zur Lenkunterstützung in Abhängigkeit des im zweiten Abschnitt 12 mittels eines Drehmomentsensors 33 abgefühlten Drehmoments M auf die Zahnstange 14 der Lenkung einzuprägen. Hierfür wird der Elektromotor 31 entsprechend einer Momenten- Sollvorgabe mittels einer untergeordneten Regelung elektrisch angesteuert. Diese Aufgaben werden durch die der Servoeinheit 30, 31 zugeordneten Steuer- und Regeleinheit "EPS-ECU" 32 übernommen.

Die Sollvorgabe für den Zusatz-Lenkwinkel δ_{Z, soll} ist im Allgemeinen abhängig von der Fahrzeuggeschwindigkeit v. Ausgangsseitig erzeugt das Überlagerungsgetriebe 20 einen Summen- Lenkwinkel δ_{G} gemäß der Beziehung δ_{S} + δ_{Z}. Das Getriebe besteht aus einem Wellenumlaufgetriebe oder einem Planetenradgetriebe.
Der im zweiten Wellenabschnitt 12 der Lenksäule 10 gebildete Summenlenkwinkel δ_{G} wird der elektrischen Servounterstützungseinheit 30 zugeführt. Das in diesem Wellenabschnitt wirkende Drehmoment M wird einer der elektrischen Servounterstützungseinheit 30 zugeordneten Steuer- und Regelungseinheit 32, "EPS- ECU" zugeführt. Nach Maßgabe des gemessenen Drehmoments M wird eine Sollvorgabe für das von dem elektrischen Servomotor 31 aufzubringende Lenkunterstützungsmoment Ms ermittelt.
Mittels eines Ritzels oder eines Schneckenradgetriebes wird die Drehbewegung des Elektromotors 31 auf die Zahnstangenlenkung 14 übertragen und eine Radlenkwinkelverstellung der gelenkten Räder 13 bewerkstelligt.

Eine der Servounterstützungseinheit 30 zugeordneten Sensorik erlaubt die Abfühlung einer Information über einen Ritzel- oder Rotorlagewinkel δ'r des Servomotors 31, die zur Kommutierung desselben verwendet wird. Da der Antriebsmechanismus mechanisch fest mit den gelenkten Rädern 13 verbunden ist, lässt sich die Information aus dem Ritzel- oder Motorwinkel zur Bestimmung des Radlenkwinkels und somit auch des Gesamt-Lenkwinkels δ_{G} verwenden. Um den vom Fahrer in den Überlagerungsteller 20 eingeprägten Lenkwinkel δ_{S} zu bestimmen, wird die mittels der der elektrischen Servounterstützungseinheit 30 zugeordneten Steuer- und Regeleinheit 31 erfasste Information über den Rotorlagewinkel δ'r der AS-ECU 21 zugeführt, welche unter Verwendung der aus dem im ersten Abschnitt 11 der Lenksäule 10 angeordneten Index-Sensor 40 stammenden Index-Information Si den Lenkwinkel δ_{S} ermittelt beziehungsweise plausibilisiert. Der Lenkwinkel δ_{S} dient im Folgenden neben der momentanen Fahrzeuggeschwindigkeit als wesentliche Eingangsgröße für die in der AS-ECU ausgeführte VSR- Funktionalität.

Die Index-Vorrichtung 40 ist hierbei bevorzugt als Nutscheibe ausgeführt, die einzelne Index-Markierungen 42, 43, 44, 45 aufweist, welche bei einer Drehbewegung mittels eines als Hall-Sensor ausgeführten Index-Sensors 41 abfühlbar sind. Die Index-Vorrichtung 40 verfügt dabei über wenigstens eine IndexMarkierung 43, die einer Null-Grad-Stellung entsprechend der Lenkwinkelstellung der Lenkhandhabe 15 bei Geradeausfahrt entspricht.
In einer Weiterentwicklung der Erfindung weist die Nutscheibe unterschiedlich breite und in den Abständen zueinander variierte Index-Markierungen 42, 43, 44, 45 auf, die über den gesamten Umfang der Scheibe angeordnet sein können. Dies hat den Vorteil, dass eine möglichst geringe Bewegung des ersten Lenksäulenabschnitts 11 erforderlich ist, um unter Berücksichtigung der Information über den aktuellen Ritzel-oder Motorwinkel δr des Elektromotors 31 eine absolute Lenkwinkelinformation δ_{S} zu errechnen.

Die aus dem Index-Sensor 41 stammenden Index-Information Si wird der Steuer-und Regeleinheit 21, AS-ECU, zugeführt, welche im Folgenden mit dem aus der EPS-ECU stammenden Information über den Ritzelwinkel δr verrechnet werden, um eine genaue, hoch aufgelöste absolute Information über den Lenkwinkel δ_{S} als wesentliche Eingangsgröße der VSR- Funktionalität zu errechnen.

Die variable Lenkübersetzungsfunktion VSR benötigt zur Bestimmung des Sollwerts für den Zusatz-Lenkwinkel δ_{Z,soll} eine Information über den aktuellen Lenkwinkel δ_{S} im ersten Abschnitt 11 der Lenksäule 10. Um den Einsatz eines hoch auflösenden und damit teuren Lenkwinkelsensors innerhalb des ersten Abschnitts zu vermeiden, ist es vorgesehen, dass die benötigte Information über den Lenkwinkel δ_{S} mittels einer lokalen Größe der elektrischen Servounterstützungseinheit 30 innerhalb des zweiten Abschnitts 12 der Lenksäule 10, nämlich der Information über die momentane Rotorlageposition δ'r des Servomotors 31, welche für die Kommutierung desselben verwendet wird, zu bestimmen.

Um eine höchstmögliche Verfügbarkeit insbesondere bei Start-Up zu erreichen, ist es vorgesehen, dass die systemlokale Winkelinformation δ_{Z,abs}, δᵣ des einen Steuergeräts AS-ECU bzw. EPS-ECU in das jeweils andere Steuergerät EPS-ECU bzw AS-ECU, zu übermitteln und dort abrufbar vorzuhalten.
Dementsprechend ist es möglich, dass das EPS-ECU Steuergerät Kenntnis über den Zusatz-Lenkwinkel δ_{Z} erhält und unter Verwendung der internen Rotorlagewinkelinformation δᵣ auf den im ersten Abschnitt anliegenden absoluten Lenkwinkels δ_{S} schließen kann.
Andererseits wird damit ermöglicht, dass die AS-ECU unter Verwendung der Ritzelwinkelinformation δᵣ auf den Gesamt-Lenkwinkel δ_{G} schließen kann und unter Kenntnis des internen Zusatz-Lenkwinkels δ_{Z} auf den vom Fahrer eingeleiteten Lenkwinkel δ_{S} schließen kann. Die Verwendung der Index-Information Si dient insbesondere für den Zweck des Neuabgleichs der absoluten Lenkwinkelstellung (Null-Grad-Position), für den Fall, dass die Winkelinformation aufgrund eines Spannungsverlusts oder eines internen Rechenfehlers oder eines (Teil-) Systemabsturz "verloren" gegangen ist, um das (Teil-) System neu abzugleichen.
Nachfolgend können die in der Regel mehrdeutigen Informationen der internen Rotorlage- Winkelsensorik mittels geeigneter Algorithmen und Plausibilisierungs-Operationen dazu verwendet werden, um einen jeweils unbekannten Winkelwert der zu Grunde liegenden systemweiten Beziehung δ_{G} = δ_{S} + δ_{Z} zu errechnen.

Eine weitere Verwendungsmöglichkeit der Index-Information Si besteht darin, dass eine durch das Überlagerungsgetriebe in den Lenkstrang eingeleitete automatische Rückführfunktion zur Findung der Null-Grad-Position optimiert ausgeführt werden kann falls mehrere oder in Länge und/oder in Beabstandung zueinander modulierte Indexmarken 43, 42, 44, 45 verwendet werden. So kann die Drehrichtung zur Findung der Null-Grad-Stellung in die - bei gleichzeitig losgelassenem Lenkraddurch entsprechende Ansteuerung des Überlagerungstellers 22 gelenkt werden soll, aufgrund der Auswertung der Index-Information Si festgelegt werden.

## Patentansprüche

1. Verfahren zur Ermittlung einer Lenkwinkelinformation (δ_{S}) zur Verwendung als Eingangsgröße einer variablen Lenkübersetzungsfunktion (VSR), die auf einer einem Überlagerungssteller (22) zugeordneten Steuer- und Regeleinheit (21), AS-ECU, zur Ausführung bereit gehalten ist und die dafür vorgesehen ist, einen Sollwert für einen Zusatz-Lenkwinkel (δ_{Z,soll}) zu ermitteln, wobei
- mittels des Überlagerungssteller (22) nach Maßgabe des Soll-Zusatz-Lenkwinkel (δ_{Z,soll}) eine Lenkbewegung in ein Überlagerungsgetriebe (20) einleitbar ist, und das Überlagerungsgetriebe (20) eine Lenksäule (10) in einen ersten Abschnitt (11) und in einen zweiten Abschnitt (12) trennt,
- im ersten Abschnitt (11) ein Fahrer-Lenkwinkel (δ_{S}) einleitbar ist, und
- im zweiten Abschnitt (12) ein Summen-Lenkwinkel (δ_{G}) aus additiver Überlagerung des Zusatz-Lenkwinkels (δ_{Z}) und des Fahrer-Lenkwinkels (δ_{S}) erzeugbar gemäß der Beziehung δ_{G} = δ_{S} + δ_{Z} ist, und
- einer im zweiten Abschnitt (12) angeordneten elektrischen Servounterstützungseinheit (30), welcher der Summen-Lenkwinkel (δ_{G}) und ein Summen-Drehmoment (M) zugeführt ist, und
- das Summen-Drehmoment (M) von einer der Servounterstützungseinheit (30) zugeordneten Steuer- und Regeleinheit (32), EPS- ECU, mittels eines Drehmomentsensors (33) abfühlbar ist und zur Ermittlung einer Sollvorgabe für ein Unterstützungsmoment (M_{S}) eines elektrischen Servomotors (31) verwendetwird,**dadurch gekennzeichnet,dass**
- die Lenkwinkelinformation (δ_{S}) über den im ersten Abschnitt (11) der Lenksäule (10) anliegenden Lenkwinkels (δ_{S}) mittels einer in diesem Abschnitt befindlichen Index-Vorrichtung (40) und mittels eines Index-Sensor (41) abgefühlten Index-Information (Si) ermittelbar ist,
- unter Verwendung einer einen Rotor- oder Ritzelwinkel beschreibenden Größe (δᵣ) des im zweiten Abschnitt der Lenksäule (12) befindlichen elektrischen Servomotors (31) bestimmbar ist, wobei
der von der EPS-ECU (32) erfasste Motor- oder Ritzelwinkel (δ'ᵣ) in eine absolute, multi-turn- fähige Information (δᵣ) über den Motor- oder Ritzelwinkel überführt und an die AS-ECU (21) zyklisch übertragen und auf einem nicht- flüchtigem Speicher auf Anfrage der EPS-ECU (32) abrufbar vorgehalten wird.

2. Verfahren zur Ermittlung einer Lenkwinkelinformation (δ_{S}) nach Anspruch 1, **dadurch gekennzeichnet, dass** die von der AS-ECU (21) erfasste oder vorliegende Zusatz-Lenkwinkelinformation (δ'_{z}, δ_{z}) in eine multiturn- fähige Information über den Zusatz-Lenkwinkel (δz) überführt und an die EPS-ECU (32) zyklisch übertragen und auf einem nicht- flüchtigem Speicher auf Anfrage der AS-ECU (21) abrufbar vorgehalten wird.

3. Verfahren zur Ermittlung einer Lenkwinkelinformation (δ_{S}) nach Anspruch 1 oder 3, **dadurch gekennzeichnet, dass** es vorgesehen ist, die jeweils durch die EPS-ECU (32) und AS-ECU (21) abrufbar vorgehaltene Informationen (δz, δᵣ) zu verwenden, um den absoluten Lenkwinkel (δ_{S}) zu ermitteln und diesen als Eingangsgröße der variablen Lenkübersetzungsfunktion (VSR) zuzuführen.

4. Verfahren zur Ermittlung einer Lenkwinkelinformation (δ_{S}) nach Anspruch 1 oder 3, **dadurch gekennzeichnet, dass** die jeweils durch die EPS-ECU (32) und AS-ECU (21) vorgehaltene Information, (δz , δᵣ) dazu verwendet wird, einen lokalen Ersatzwert für einen unbekannten Winkelwert zu errechnen.

5. Verfahren zur Ermittlung einer Lenkwinkelinformation (δ_{S}) nach einem der vorstehenden Ansprüche 1 bis 4, **dadurch gekennzeichnet, dass** die Index-Vorrichtung (40) eine Index- Markierung (43) aufweist, entsprechend einer Null-Grad-Stellung der Lenksäule (10) im ersten Abschnitt (11) und dass eine dieser Stellung entsprechende Index-Information (Sᵢ) mittels des Index-Sensors (41) detektierbar ist.

6. Verfahren zur Ermittlung einer Lenkwinkelinformation (δ_{S}) nach einem der vorstehenden Ansprüche 1 bis 5, **dadurch gekennzeichnet, dass** die Index-Vorrichtung (40) zumindest über einen teilweisen Umfang weitere Index-Markierungen (42, 44, 45) aufweist, die mittels des Index-Sensors (41) detektierbar sind.

7. Verfahren zur Ermittlung einer Lenkwinkelinformation (δ_{S}) nach einem der vorstehenden Ansprüche 1 bis 6, **dadurch gekennzeichnet, dass** wenigstens zwei Index-Markierungen (42, 43, 44, 45) einen veränderten Abstand und/oder Breite zueinander aufweisen.

8. Verfahren zur Ermittlung einer Lenkwinkelinformation (δ_{S}) nach einem der vorstehenden Ansprüche 1 bis 7, **dadurch gekennzeichnet, dass** die Index-Information (Si) zur Findung einer Null-Grad Stellung im ersten Abschnitt (11) der Lenksäule (10) verwendet wird.

9. Computerprogramm mit Programmcodemitteln, um ein Verfahren gemäß einem der Ansprüche 1 bis 8 durchzuführen, wenn das Programm auf einem Mikroprozessor eines Computers, insbesondere verteilt auf wenigstes zwei Steuergeräten (21, 32) einer elektrischen Servolenkung (30) mit Überlagerungseinheit (20, 22), ausgeführt wird.

10. Computerprogrammprodukt mit Programmcodemitteln, die auf einem computerlesbaren Datenträger gespeichert sind, um ein Verfahren gemäß einem der Ansprüche 1 bis 8 durchzuführen, wenn das Programm auf einem Mikroprozessor eines Computers, insbesondere verteilt auf wenigstes zwei Steuergeräten (21, 32) einer elektrischen Servolenkung (30) mit Überlagerungseinheit (20, 22), ausgeführt wird.

11. Elektrische Servolenkung (30,31) mit einem Überlagerungssteller (22) und einem Überlagerungsgetriebe (20) mit zwei funktional zuordenbaren Steuergeräten (21, 32), **dadurch kennzeichnet, dass** im ersten Abschnitt (11) der Lenksäule (10) eine Index-Vorrichtung (40) angeordnet ist mit wenigstens einem Index-Sensor (41) und wenigstens einer Indexmarkierung 43, vorgesehen zur Identifikation einer definierten Winkelstellung, wobei die Index-Vorrichtung (40) weitere Index-Markierungen (42, 44, 45) aufweist, die in Länge und/oder Abstand zueinander moduliert sind.

## Claims

1. Method for determining steering angle information (δₛ) for use as input variable of a variable steering transmission ratio function (VSR) which is kept ready for execution on an open-loop and closed-loop control unit (21), AS-ECU, assigned to a superimposition actuator (22), and which is provided for determining a setpoint value for an additional steering angle (δ_{Z,setp}), wherein
- by means of the superimposition actuator (22) a steering movement can be applied to a superimposition gear mechanism (20) in accordance with the setpoint additional steering angle (δ_{Z,setp}), and the superimposition gear mechanism (20) divides a steering column (10) into a first section (11) and a second section (12),
- in the first section (11) a driver steering angle (δₛ) can be applied, and
- in the second section (12) a total steering angle (δ_{G}) can be generated from the additive superimposition of the additional steering angle (δ_{Z}) and the driver steering angle (δₛ) according to the relationship δ_{G} = δₛ + δ_{Z}, and
- an electric power steering unit (30) which is arranged in the second section (12) and to which the total steering angle (δ_{G}) and a total torque (M) are fed, and
- the total torque (M) can be sensed by an open-loop and closed-loop control unit (32), EPS-ECU, assigned to the power steering unit (30), by means of a torque sensor (33) and used to determine a setpoint predefined value for an assistance torque (M_{S}) of an electric servo motor (31), **characterized in that**
- the steering angle information (δₛ) relating to the steering angle (δₛ) present in the first section (11) of the steering column (10) can be determined by means of an index device (40) located in this section, and index information (Sᵢ) sensed by means of an index sensor (41),
- can be determined using a variable (δᵣ), describing a rotor angle or pinion angle, of the electric servo motor (31) located in the second section of the steering column (12), wherein
the motor angle or pinion angle (δ'ᵣ) which is sensed by the EPS-ECU (32) is converted into absolute multi-turn-capable information (δᵣ) relating to the motor angle or pinion angle and transmitted cyclically to the AS-ECU (21) and is held in a non-volatile memory in such a way that it can be retrieved at the request of the EPS-ECU (32).

2. Method for determining steering wheel information (δₛ) according to Claim 1, **characterized in that** the additional steering angle information (δ'_{z}, δ_{z}) which is sensed by the AS-ECU (21) or is present is converted into multi-turn-capable information relating to the additional steering angle (δ_{z}) and transmitted cyclically to the EPS-ECU (32) and held in a non-volatile memory in such a way that it can be retrieved at the request of the AS-ECU (21).

3. Method for determining steering wheel information (δₛ) according to Claim 1 or 3, **characterized in that** there is provision that the information (δ_{Z}, δᵣ) which is respectively held in such a way that it can be retrieved by the EPS-ECU (32) and AS-ECU (21) is used in order to determine the absolute steering angle (δₛ) and to feed the latter as an input variable to the variable steering transmission ratio function (VSR).

4. Method for determining steering angle information(δₛ) according to Claim 1 or 3, **characterized in that** the information (δ_{Z}, δᵣ) which is respectively held by the EPS-ECU (32) and AS-ECU (21) is used to calculate a local equivalent value for an unknown angle value.

5. Method for determining steering angle information (δₛ) according to one of the preceding Claims 1 to 4, **characterized in that** the index device (40) has an index mark (43) corresponding to a zero degrees position of the steering column (10) in the first section (11), and **in that** index information (Sᵢ) corresponding to this position can be detected by means of the index sensor (41).

6. Method for determining steering angle information (δₛ) according to one of the preceding Claims 1 to 5, **characterized in that** the index device (40) has at least further index marks (42, 44, 45) over a partial circumference, which index marks (42, 44, 45) can be detected by means of the index sensor (41).

7. Method for determining steering angle information (δₛ) according to one of the preceding Claims 1 to 6, **characterized in that** at least two index marks (42, 43, 44, 45) have a changed distance and/or width with respect to one another.

8. Method for determining steering angle information (δₛ) according to one of the preceding Claims 1 to 7, **characterized in that** the index information (Sᵢ) is used to define a zero degrees position in the first section (11) of the steering column (10).

9. Computer program having program code means in order to carry out a method according to one of Claims 1 to 8 when the program is executed on a microprocessor of a computer, in particular distributed over at least two control devices (21, 32) of an electric power steering system (30) with a superimposition unit (20, 22).

10. Computer program product having program code means which are stored on a computer-readable data carrier in order to carry out a method according to one of Claims 1 to 8 when the program is executed on a microprocessor of a computer, in particular distributed over at least two control devices (21, 32) of an electric power steering system (30) with a superimposition unit (20, 22).

11. Electric power steering system (30, 31) having a superimposition actuator (22) and a superimposition gear mechanism (20) with two functionally assignable control devices (21, 32), **characterized in that** an index device (40) is arranged in the first section (11) of the steering column (10), having at least one index sensor (41) and at least one index mark (43), provided for identifying a defined angular position, wherein the index device (40) has further index marks (42, 44, 45) which are modulated with respect to one another in terms of length and/or distance.

## Revendications

1. Procédé de détermination d'une information (δ_{S}) d'angle de braquage destinée à être utilisée comme grandeur d'entrée dans une fonction variable (VSR) de conversion de braquage qui est mise à disposition sur une unité de commande et de régulation (21), AS-ECU, associée à un régleur de superposition (22) pour être exécutée et qui est prévue pour déterminer une valeur de consigne d'un angle supplémentaire de braquage (δ_{Z,soll}), et dans lequel :
un déplacement de braquage peut être introduit dans une transmission de superposition (20) au moyen du régleur de superposition (22) et en fonction de l'angle supplémentaire de consigne de braquage (δ_{Z,soll}), la transmission de superposition (20) séparant une colonne de direction (10) en une première partie (11) et une deuxième partie (12),
un angle de braquage (δ_{S}) pouvant être établi par le conducteur dans la première partie (11) et
un angle de somme de braquage (δ_{G}) pouvant être formé dans la deuxième partie (12) selon l'équation δ_{G} = δ_{S} + δ_{Z} par superposition additive de l'angle supplémentaire de braquage (δ_{Z}) et de l'angle de braquage (δ_{S}) établi par le conducteur et
une unité électrique de servo-soutien (30) disposée dans la deuxième partie (12) et à laquelle l'angle de somme de braquage (δ_{G}) et un couple de somme de rotation (M) est apporté,
le couple de somme de braquage (M) pouvant être détecté par une unité de commande et de régulation (32), EPS-ECU, associée à l'unité (30) de servo-soutien au moyen d'un capteur (33) de couple de rotation et étant utilisé pour déterminer une consigne de couple de soutien (M_{S}) exercé par un servomoteur électrique (31), **caractérisé en ce que**
l'information (δ_{S}) d'angle de braquage peut être déterminée par l'intermédiaire de l'angle de braquage (δ_{S}) appliqué sur la première partie (11) de la colonne de direction (10) au moyen d'un dispositif d'indexation (40) situé dans cette partie et d'une information d'indexation (Si) détectée au moyen d'un capteur d'indexation (41),
**en ce qu'**elle peut être déterminée en recourant à une grandeur (δᵣ) du servomoteur électrique (31) prévu dans la deuxième partie de la colonne de direction (12) et décrivant un angle de rotor ou de pignon,
l'angle de moteur ou de pignon (δ'ᵣ) détecté par l'EPS-ECU (32) étant converti en une information absolue (δᵣ), s'étendant sur plusieurs tours, concernant l'angle de moteur ou de pignon, étant transmis cycliquement à l'AS-ECU (21) et pouvant être conservé sur une mémoire non volatile interrogée à la demande par l'EPS-ECU (32).

2. Procédé de détermination d'une information (δ_{S}) d'angle de braquage selon la revendication 1, **caractérisé en ce que** l'information supplémentaire (δ'_{Z}, δ_{Z}) d'angle de braquage saisie par l'AS-ECU (21) ou présente sur ce dernier est convertie en une information sur plusieurs tours concernant l'angle supplémentaire de braquage (δ_{Z}) et transférée cycliquement à l'EPS-ECU (32) est conservée sur une mémoire non volatile qui peut être interrogée à la demande par l'AS-ECU (21).

3. Procédé de détermination d'une information (δ_{S}) d'angle de braquage selon les revendications 1 ou 3, **caractérisé en ce qu'**il prévoit d'utiliser chacune des informations (δ_{Z}, δᵣ) conservées de façon à pouvoir être demandées par l'EPS-ECU (32) et l'AS-ECU (21) pour déterminer l'angle absolu de braquage (δ_{S}) et amener ce dernier comme grandeur d'entrée à la fonction variable de conversion de braquage (VSR).

4. Procédé de détermination d'une information (δ_{S}) d'angle de braquage selon les revendications 1 ou 3, **caractérisé en ce que** chaque information (δ_{Z}, δᵣ) conservée par l'EPS-ECU (32) et l'AS-ECU (21) est utilisée pour calculer une valeur locale de remplacement d'une valeur angulaire inconnue.

5. Procédé de détermination d'une information (δ_{S}) d'angle de braquage selon l'une des revendications 1 à 4 qui précèdent, **caractérisé en ce que** le dispositif d'indexation (40) présente un repérage d'indexation (43) qui correspond à la position à zéro degré de la colonne de direction (10) de la première partie (11) et **en ce qu'**une information d'indexation (Sᵢ) qui correspond à cette position peut être détectée au moyen du capteur d'indexation (41).

6. Procédé de détermination d'une information (δ_{S}) d'angle de braquage selon l'une des revendications 1 à 5 qui précèdent, **caractérisé en ce que** le dispositif d'indexation (40) présente sur une partie de sa périphérie au moins d'autres repérages d'indexation (42, 44, 45) qui peuvent être détectés au moyen du capteur d'indexation (41).

7. Procédé de détermination d'une information (δ_{S}) d'angle de braquage selon l'une des revendications 1 à 6 qui précèdent, **caractérisé en ce qu'**au moins deux repérages d'indexation (42, 43, 44, 45) présentent l'un par rapport à l'autre une distance et/ou un écart modifiés.

8. Procédé de détermination d'une information (δ_{S}) d'angle de braquage selon l'une des revendications 1 à 7 qui précèdent, **caractérisé en ce que** l'information d'indexation (Sᵢ) est utilisée pour découvrir la position à zéro degré de la première partie (11) de la colonne de direction (10).

9. Programme informatique doté de moyens de code de programme permettant de mettre en oeuvre un procédé selon l'une des revendications 1 à 8 lorsque le programme est exécuté sur un microprocesseur d'un ordinateur, en particulier réparti sur au moins deux appareils de commande (21, 32) d'une servo-direction électrique (30) dotée d'une unité de superposition (20, 22).

10. Programme informatique doté de moyens de code de programme conservés sur un support de données lisibles par ordinateur, permettant de mettre en oeuvre un procédé selon l'une des revendications 1 à 8 lorsque le programme est exécuté sur un microprocesseur d'un ordinateur, en particulier réparti sur au moins deux appareils de commande (21, 32) d'une servo-direction électrique (30) dotée d'une unité de superposition (20, 22).

11. Servo-direction électrique (30, 31) dotée d'un régleur de superposition (22) et d'une transmission de superposition (20) ainsi que de deux appareils de commande (21, 32) qui peuvent leur être associés fonctionnellement, **caractérisée en ce qu'**un dispositif d'indexation (40) est disposé dans la première partie (11) de la colonne de direction (10) et présente au moins un capteur d'indexation (41) et au moins un repère d'indexation (43) pour identifier une position angulaire définie, le dispositif d'indexation (40) présentant d'autres repères d'indexation (42, 44, 45) dont la longueur et/ou la distance mutuelle sont modulées.
